# EUROPÄISCHE PATENTANMELDUNG

(11) **EP 2 818 301 A1**
(43) Veröffentlichungstag der Anmeldung: **31.12.2014**
(21) Anmeldenummer: 14174679.2
(22) Anmeldetag: 27.06.2014
(51) Int. Cl.: B29C 49/00, B29L 23/00

(54) **Verfahren zum Herstellen eines Kunststoffrohrs sowie entsprechende Einrichtung zur Herstellung eines Kunststoffrohrs**

(30) Priorität: 28.06.2013 DE 102013212643
(71) Anmelder: Sabel, Bernhard A., 49757 Werlte (DE)
(72) Erfinder: Sabel, Bernhard A., 49757 Werlte (DE)
(74) Vertreter: Dietz, Christopher Friedrich

(57) **Zusammenfassung**

Die Erfindung betrifft ein Verfahren zum Herstellen eines Kunststoffrohrs (2), insbesondere eines Kunststoffunterdruckrohrs für ein Kraftfahrzeug, mit den Schritten: Herstellen oder Bereitstellen eines Hohlstabs als Rohrrohling; Einbringen des Rohrrohlings in eine, einen Formhohlraum (10) aufweisende Form (3); und Ausbilden des Kunststoffrohrs (2) durch Einleiten eines Umformmediums in den Rohrrohling zum Umformen, insbesondere Innenhochdruckumformen, des Rohrrohlings. Dabei ist vorgesehen, dass das Umformmedium überhitzt und in überhitztem Zustand in den Rohrrohling eingeleitet wird, dass als Form (3) eine Vollkonturform verwendet wird und/oder dass die Form (3) zum Erwärmen des Umformmediums beheizt wird.

## Beschreibung

Die Erfindung betrifft ein Verfahren zum Herstellen eines Kunststoffrohrs, insbesondere eines Kunststoffunterdruckrohrs für ein Kraftfahrzeug, mit den Schritten: Herstellen oder Bereitstellen eines Hohlstabs als Rohrrohling; Einbringen des Rohrrohlings in eine, einen Formhohlraum aufweisende Form; und Ausbilden des Kunststoffrohrs durch Einleiten eines Umformmediums in den Rohrrohling zum Umformen, insbesondere Innenhochdruckumformen, des Rohrrohlings. Die Erfindung betrifft weiterhin eine Einrichtung zur Herstellung eines Kunststoffrohrs.

Bei der Entwicklung von Kraftfahrzeugen, insbesondere Kraftfahrzeugantriebsaggregaten, haben die Ziele Verbrauchssenkung sowie Ressourcenschonung zu dem Trend des "Downsizing" geführt. Das bedeutet, dass die Antriebsaggregate kompakter gebaut werden, kleinere Brennräume bei gleichzeitig höherer Verdichtung aufweisen und/oder mit geeigneten Elementen gegen Wärmeverluste geschützt sind. Dies hat Auswirkungen auf zahlreiche wesentliche Komponenten der Antriebsaggregate. Insbesondere Kunststoffleitungen beziehungsweise Kunststoffrohre, die in Form von Kunststoffunterdruckleitungen beziehungsweise Kunststoffunterdruckrohren beispielsweise für Bremskraftverstärker und dergleichen eingesetzt werden, sind dabei schwierig zu handhaben. Sie sind zum einen in höchstem Maße sicherheitsrelevant, jedoch sind zum anderen die bisher verwendeten Materialien den aufgrund der vorstehenden Maßnahmen erhöhten Anforderungen häufig nicht mehr gewachsen sind.

Dies gilt insbesondere für die Anforderungen hinsichtlich der Temperatur, weil die kompaktere Ausgestaltung der Antriebsaggregate zu einer motornäheren Anordnung der Kunststoffunterdruckrohre führen kann. Häufig müssen daher aufwändige Schutzmaßnahmen für die verwendeten Kunststoffunterdruckrohre realisiert werden, beispielsweise mittels Dämmung, Kompromissen beim Thermomanagement oder hinsichtlich der Anordnung der Kunststoffunterdruckrohre. Hochtemperaturbeständige Kunststoffrohre, insbesondere Kunststoffunterdruckrohre, sind dagegen aufwändig in der Fertigung.

Die vorstehenden Ausführungen gelten analog auch beispielsweise für Überdruckleitungen beziehungsweise Überdruckrohre, Kraftstoffleitungen, Kühlwasserleitungen und Leitungen für Akustikanwendungen.

Es ist daher Aufgabe der Erfindung, ein Verfahren zum Herstellen eines Kunststoffrohrs vorzuschlagen, mittels welchem insbesondere auch hochtemperaturbeständige Kunststoffrohre auf einfache Art und Weise zuverlässig verarbeitet, insbesondere gebogen, werden können.

Dies wird erfindungsgemäß mit einem Verfahren mit den Merkmalen des Anspruchs 1 erreicht. Dabei ist vorgesehen, dass das Umformmedium überhitzt und in überhitztem Zustand in den Rohrrohling eingeleitet wird, dass als Form eine Vollkonturform verwendet wird und/oder dass die Form zum Erwärmen des Umformmediums beheizt wird. Das Verfahren weist mehrere Schritte auf. Zunächst wird der Hohlstab hergestellt beziehungsweise bereitgestellt. Dieser Hohlstab, welcher einen, insbesondere zentralen, Hohlraum aufweist, dient nachfolgend als Rohrrohling, aus welchem das Kunststoffrohr ausgebildet wird. Der Hohlstab beziehungsweise der Rohrrohling besteht aus einem Kunststoffmaterial. Der Rohrrohling wird nun in die Form eingebracht, welche den Formhohlraum aufweist, beziehungsweise in den Formhohlraum selbst.

Der Formhohlraum liegt vorzugsweise mit derjenigen Gestalt vor, welche der beabsichtigen Gestalt des fertigen Kunststoffrohrs entspricht oder zumindest nahezu entspricht. Beispielsweise ist die Form als Biegeform ausgebildet, weist also in ihrem Verlauf in Längsrichtung wenigstens einen Richtungswechsel, beispielsweise in Form einer Biegung, auf. Vor oder bei dem Einbringen in die Biegeform kann der Rohrrohling vorgebogen werden. Das bedeutet, dass er eine bestimmte Elastizität aufweist beziehungsweise bei einer Temperatur vorliegt, bei welcher diese Elastizität gegeben ist. Dabei kann es vorgesehen sein, dass der Rohrrohling vor oder bei dem Einbringen in die Biegeform auf eine Temperatur erwärmt wird, bei welcher das Vorbiegen auf einfache Art und Weise, insbesondere ohne eine strukturelle Beschädigung des Rohrrohlings, möglich ist.

Liegt der Rohrrohling in der Form beziehungsweise dem Formhohlraum vor, so wird das Umformmedium in den Rohrrohling, mithin also in den Hohlraum des Rohrrohlings, eingeleitet. Dabei weist das Umformmedium eine bestimmte Temperatur und einen bestimmten Druck auf. Die Temperatur und der Druck sind derart gewählt, dass das Umformen, insbesondere Innenhochdruckumformen, des Rohrrohlings in der Form erfolgt, sodass das Kunststoffrohr ausgebildet wird. Das bedeutet insbesondere, dass das Umformmedium eine Temperatur aufweist, welche zumindest einer Fixierungstemperatur des für das Kunststoffrohr verwendeten Kunststoffmaterials entspricht, ab welcher das ausgebildete Kunststoffrohr auch nach dem Entnehmen aus der Form seine in dieser aufgeprägte Gestalt beibehält beziehungsweise zumindest näherungsweise beibehält, zumindest solange keine externen Kräfte auf das Kunststoffrohr aufgebracht werden.

Nach dem Ausbilden des Kunststoffrohrs aus dem Rohrrohling ist bevorzugt ein Abkühlen des Kunststoffrohrs vorgesehen, insbesondere bis auf die Umgebungstemperatur, zumindest jedoch bis unter die Fixierungstemperatur, sodass nachfolgend eine Formstabilität des Kunststoffrohrs gegeben ist.

Der Rohrrohling kann einschichtig, aber auch mehrschichtig ausgebildet sein. Darunter ist zu verstehen, dass entweder lediglich eine Schicht aus einem einzigen Kunststoffmaterial vorliegt oder aber mehrere aneinander anliegende Schichten realisiert sind. Diese mehreren Schichten können aus demselben Kunststoffmaterial bestehen. Es kann jedoch auch vorgesehen sein, dass wenigstens zwei der Schichten aus unterschiedlichen Materialien, insbesondere Kunststoffmaterialien, bestehen. Beispielsweise weist der Rohrrohling drei Schichten auf.

Um nun auch hochtemperaturbeständige Kunststoffrohre zuverlässig mittels der Form in die gewünschte Gestalt bringen zu können, ist es in einer ersten Ausführungsform vorgesehen, das Umformmedium zu überhitzen und in überhitztem Zustand in den Rohrrohling einzuleiten. Alternativ kann selbstverständlich das Umformmedium in nicht überhitztem Zustand in den Rohrrohling eingebracht und erst anschließend durch entsprechende Wärmezufuhr überhitzt werden.

Unter dem Überhitzen ist zu verstehen, dass das Umformmedium zunächst bei einer bestimmten Temperatur und einem bestimmten Druck vorliegt und nachfolgend bei vorzugsweise gleichbleibendem Druck weiter erwärmt wird. Entsprechend steigt die Temperatur des Umformmediums bei konstantem Druck an. Der Druck wird dabei beispielsweise derart gewählt, dass ein zuverlässiges Formen des Rohrrohlings in der Form erzielt wird, sich also der Rohrrohling an die zumindest eine Wand des Formhohlraums anschmiegt. Ein derartiges Anschmiegen muss jedoch nicht vorgesehen sein, insbesondere bei der Verwendung der Teilkonturform. Vorzugsweise sind Druck und/oder Temperatur derart gewählt, dass das Kunststoffrohr beziehungsweise der Rohrrohling nach dem Abkühlen und Entnehmen aus der Form seine durch die Form vorgegebene Gestalt zumindest im Wesentlichen, insbesondere exakt, beibehält.

Beispielsweise beträgt der Druck höchstens 30 bar, höchstens 25 bar, höchstens 20 bar, höchstens 15 bar, höchstens 10 bar, höchstens 9 bar, höchstens 8 bar, höchstens 7 bar, höchstens 6 bar oder höchstens 5 bar. Der Druck wird bevorzugt in Abhängigkeit von dem verwendeten Kunststoffmaterial festgelegt.

Die Temperatur des überhitzten Umformmediums wird gemäß den vorstehenden Ausführungen derart gewählt, dass sie zumindest größer ist als die Fixierungstemperatur des Kunststoffmaterials. Im Vergleich zu anderen Verfahren kann also eine deutlich höhere Temperatur des Umformmediums verwendet werden, der Druck jedoch gleich bleiben. Auf diese Art und Weise ist es möglich, eine herkömmliche Form, insbesondere eine Biegeform, zu verwenden, ohne eine Beschädigung des Rohrrohlings beim Einleiten des Umformmediums befürchten zu müssen. Insbesondere in dieser Ausführungsform ist es möglich, als Form eine Teilkonturform zu verwenden, welche während des Einleitens des Umformmediums den Rohrrohling lediglich bereichsweise umgreift. In Längsrichtung des Rohrrohlings gesehen beziehungsweise entlang einer Längsmittelachse des Rohrrohlings umgreift die Teilkonturform also an wenigstens einer Axialposition den Rohrrohling in Umfangsrichtung lediglich bereichsweise, also nicht vollständig. Beispielsweise ist die Teilkonturform über ihre gesamte Erstreckung in Längsrichtung geschlitzt, weist also einen Schlitz derart auf, dass an jeder Axialposition der Rohrrohling lediglich teilweise in Umfangsrichtung umgriffen ist.

In einer zweiten Ausführungsform, welche besonders bevorzugt mit der ersten Ausführungsform kombiniert werden kann, jedoch auch separat verwendbar ist, wird als Form eine Vollkonturform verwendet. Diese zeichnet sich dadurch aus, dass der Rohrrohling von der Form größtenteils vollständig umgriffen ist. Insbesondere ist die Vollkonturform derart ausgestaltet, dass - wiederum in Längsrichtung des Rohrrohlings gesehen beziehungsweise entlang seiner Längsmittelachse - der Rohrrohling an jeder Axialposition in Umfangsrichtung vollständig von der Form umgriffen ist. Lediglich an seinen Enden ist der Rohrrohling bei einer derartigen Ausgestaltung der Form zugänglich, insbesondere um das Einleiten des Umformmediums beziehungsweise ein Hindurchleiten des Umformmediums durch den Rohrrohling zu realisieren.

Bei einer derartigen Vollkonturform ist es auch bei hochtemperaturbeständigen Kunststoffrohren nicht unbedingt notwendig, den Druck des Umformmediums gering zu halten, beispielsweise durch das vorstehend beschriebene Überhitzen. Vielmehr kann bevorzugt ein Druck des Umformmediums verwendet werden, welcher größer als der Schmelzdruck und/oder der Berstdruck des Kunststoffrohrs ist. In letzterem Fall ist der Druck derart hoch, dass bei einem Einleiten des Umformmediums bei diesem Druck der Rohrrohling beschädigt werden würde, insbesondere platzen würde, wenn er nicht in der Vollkonturform aufgenommen wäre. Beispielsweise beträgt der Druck mindestens 10 bar, mindestens 11 bar, mindestens 12 bar, mindestens 13 bar, mindestens 14 bar, mindestens 15 bar, mindestens 20 bar, mindestens 25 bar oder mindestens 30 bar.

Besonders bevorzugt werden der Druck und die Temperatur des Umformmediums in Abhängigkeit voneinander derart gewählt, dass das Umformmedium ein plastisches Umformen des Rohrrohlings bewirkt. Beispielsweise wird zu diesem Zweck die Temperatur auf eine Temperatur festgelegt, die gleich oder größer der Fixierungstemperatur des Rohrrohlings beziehungsweise des verwendeten Kunststoffmaterials ist. Anschließend wird ein geeigneter Druck bestimmt, bei dem bei der zuvor gewählten Temperatur das Umformen des Rohrrohlings auftritt.

In einer besonders bevorzugten Ausführungsform ist selbstverständlich eine Kombination der vorstehend beschriebenen Ausführungsformen vorgesehen, bei welcher also als Form die Vollkonturform verwendet wird und gleichzeitig das Umformmedium in überhitztem Zustand in den Rohrrohling eingeleitet wird. Bei allen vorstehend beschriebenen Ausführungsformen, ob einzeln oder in Kombination miteinander, kann es besonders vorteilhaft auch vorgesehen sein, die Form zu beheizen, um das Umformmedium zu erwärmen. Selbstredend kann jedoch das Beheizen der Form auch separat von den vorstehend beschriebenen Ausführungsformen verwendet werden, sodass also die für das Umformen beziehungsweise Innenhochdruckumformen notwendige Wärme allein durch das Beheizen der Form bereitgestellt wird.

Beispielsweise erfolgt das Erwärmen und/oder Überhitzen des Umformmediums mit über die Vollkonturform zugeführter Wärme. Insoweit ist es nicht notwendig, das Erwärmen beziehungsweise Überhitzen bereits vor dem Einleiten vorzunehmen, wobei dies selbstverständlich bevorzugt vorgesehen ist. Das Heizen kann zudem dazu dienen, das Umformmedium in seinem überhitzten Zustand zu halten.

Mit dem beschriebenen Verfahren können insbesondere sehr kleine Biegeradien erzielt werden, beispielsweise Biegeradien von höchstens 30mm, höchstens 27,5mm oder höchstens 25mm. Auch wird eine sehr gute Konturstabilität erreicht, die zudem prozesssicher ist. Das bedeutet, dass es bevorzugt nicht notwendig ist, das Kunststoffrohr nach seiner Herstellung hinsichtlich seiner Gestalt zu prüfen. Vielmehr kann es ausreichend sein, lediglich die Betriebsparameter des Umformens, insbesondere den Druck, die Temperatur und/oder die Menge des eingebrachten Umformmediums zu überwachen, um auf die Qualität der hergestellten Kunststoffrohre zu schließen. Eine Qualitätskontrolle, die auf das Umformen folgt, kann insoweit allein auf Grundlage oder zumindest unter Heranziehung zumindest eines Betriebsparameters des Umformens vorgenommen werden. Die hohe Konturstabilität, die insbesondere auch bei hohen Temperaturen gegeben ist, wird insbesondere durch die hohe Temperatur und/oder den hohen Druck des Umformmediums erreicht.

In einer bevorzugten Ausgestaltung der Erfindung ist vorgesehen, dass als Umformmedium gesättigter Dampf, insbesondere Wasserdampf, verwendet wird. Das Umformmedium ist insoweit vorzugsweise vollständig gasförmig. Das Umformmedium wird beispielsweise durch Verdampfen einer Flüssigkeit, insbesondere Wasser, hergestellt. Zu diesem Zweck wird die Flüssigkeit auf oder über ihre Siedetemperatur erwärmt, bis ein Masseanteil des Dampfs von Eins beziehungsweise 100 % erreicht ist.

In einer weiteren Ausführungsform ist vorgesehen, dass das Umformen innendornlos erfolgt. Vor dem Einbringen in die Form und/oder vor einem eventuellen Vorformen kann es vorgesehen sein, eine Seele - die auch als Innendorn bezeichnet werden kann - in den Rohrrohling einzubringen. Auf diese Art und Weise können unerwünschte Verformungen des Rohrrohlings beziehungsweise des fertigen Kunststoffrohrs vermieden werden. Die Seele ist beispielsweise eine Feder. Die Seele wird insbesondere nach dem Umformen beziehungsweise Innenhochdruckumformen wieder entnommen und kann erneut verwendet werden.

Alternativ kann die Seele auch nach dem Einbringen in die Form, jedoch noch vor dem Umformen beziehungsweise dem Einbringen des Umformmediums wieder aus dem Rohrrohling entnommen werden. Besonders bevorzugt werden sowohl das Einbringen als auch das Umformen beziehungsweise Innenhochdruckumformen jedoch innendornlos vorgenommen, also ohne das vorherige Einbringen der Seele. Dies ermöglicht eine bessere Verteilung des Umformmediums in dem Rohrrohling.

Eine weitere Ausgestaltung der Erfindung sieht vor, dass das Umformmedium bei dem Einleiten eine Temperatur aufweist, die größer oder gleich der Fixierungstemperatur eines für das Kunststoffrohr verwendeten Kunststoffmaterials gewählt wird. Auf eine derartige Vorgehensweise wurde bereits vorstehend hingewiesen. Die Fixierungstemperatur ist diejenige Temperatur, auf welche das Kunststoffmaterial des Rohrrohlings erwärmt werden muss, damit nach einem auf das Ausbilden des Kunststoffrohrs folgenden Abkühlen die Formstabilität des Kunststoffrohrs gewährleistet ist, dieses also auch nach dem Entnehmen aus der Form zumindest im Wesentlichen weiterhin seine in der Form angenommene Gestalt beibehält, insbesondere genau die angenommene Gestalt. Die Fixierungstemperatur entspricht beispielsweise der Erweichungstemperatur beziehungsweise Glasübergangstemperatur oder der Fließtemperatur des Kunststoffmaterials. Alternativ kann die Fixierungstemperatur auch größer als die Erweichungstemperatur, jedoch kleiner als die Fließtemperatur gewählt werden.

Eine Weiterbildung der Erfindung sieht vor, dass ein Kunststoffmaterial mit einer Fixierungstemperatur von mindestens 160°C, mindestens 170°C, mindestens 180°C, mindestens 190°C, midestens 200°C, mindestens 225°C oder mindestens 250°C verwendet wird. Derzeit üblicherweise für die Herstellung von Kunststoffrohren verwendeten Kunststoffmaterialien weisen Fixierungstemperaturen von höchstens 150°C auf. Entsprechend war es bislang nbht notwendig, die Temperatur des Umformmediums isobar im Rahmen des Überhitzens zu erhöhen und/oder die Vollkonturform zum Formen des Kunststoffrohrs einzusetzen, weil bereits bei geringer Temperatur und entsprechend geringem Druck ein zuverlässiges Ausbilden des Kunststoffrohrs aus dem Rohrrohling möglich war.

Wie bereits eingangs erläutert, reicht die Temperaturbeständigkeit derartiger Kunststoffmaterialien, beispielsweise PA11 oder PA12, nicht mehr aus, um die Anforderungen moderner Antriebsaggregate ohne zusätzliche Schutzmaßnahmen zu erfüllen. Aus diesem Grund soll nun das hochtemperaturfeste Kunststoffmaterial verwendet werden, welches mindestens die genannte Fixierungstemperatur aufweist. Dazu sind aber die vorstehend genannten Maßnahmen, also das Überhitzen des Umformmediums beziehungsweise das Verwenden der Vollkonturform, entweder einzeln oder in Kombination miteinander notwendig.

Es kann vorgesehen sein, dass die Temperatur des Umformmediums mindestens 160°C, mindestens 170°C, mindestens180°C, mindestens 190°C, mindestens 200°C, mindestens 225°C der mindestens 250°C beträgt. Die Temperatur des Umformmediums, welches in den Rohrrohling eingebracht wird, muss größer oder gleich der vorstehend genannten Fixierungstemperatur sein, um ein Neuordnen des Gefüges des Kunststoffmaterials zu bewirken, während der Rohrrohling in der Form einliegt. Entsprechend wird eine Temperatur verwendet, welche mindestens der vorstehend genannten Temperatur entspricht oder bevorzugt größer ist als diese. Beispielsweise ist die Temperatur des Umformmediums mindestens 10 K, mindestens 20 K, mindestens 30 K, mindestens 40 K oder mindestens 50 K größer als die Fixierungstemperatur des verwendeten Kunststoffmaterials.

In einer bevorzugten Ausgestaltung der Erfindung ist vorgesehen, dass als Kunststoffmaterial ein Polyamid, insbesondere PA66, verwendet wird. Das Polyamid ist, wie bereits vorstehend ausgeführt, bevorzugt hochtemperaturfest. Dies ist beispielsweise für PA66 der Fall. Dieses Kunststoffmaterial hat eine Erweichungstemperatur von etwa 200°C. Der Werkstoff PA66 hat den Vorteil, dass er bei gleichzeitig höherer Temperaturbeständigkeit als beispielsweise PA11
oder PA12 deutlich preisgünstiger in der Beschaffung ist. Auch die Medienbeständigkeit gegenüber korrosiven Stoffen ist bei PA66 den vorstehend genannten Werkstoffen zumindest ebenbürtig.

Alternativ kann selbstverständlich ein anderes Kunststoffmaterial verwendet werden, insbesondere Polyethylen (PE), Polyphthalamid (PPA), Polyphenylensulfid (PPS) oder andere. Auch ein Gemisch aus wenigstens zwei der vorstehend genannten Kunststoffe kann als das Kunststoffmaterial herangezogen werden.

Besonders bevorzugt wird dem Kunststoffmaterial, insbesondere dem Werkstoff PA66, wenigstens ein Additiv beigemischt. Insbesondere bewirkt dieses Additiv, dass das E-Modul des Kunststoffmaterials abgesenkt wird. Beispielsweise wird das E-Modul, welches für reines PA66 bei etwa 3.600 bis 5.500 MPa liegt, auf höchstens 1.000 MPa abgesenkt wird. Zusätzlich oder alternativ kann dem Kunststoffmaterial ein Füllstoff, beispielsweise Fasern, Mineralien oder Nanopartikel, zugegeben werden. Beispielsweise wird durch Zugabe des Additivs und/oder des Füllstoffs der Werkstoff PA66 derart modifiziert, dass er rohrextrusionsfähig ist und/oder eine geeignete Medienbeständigkeit aufweist.

Besonders vorteilhaft ist eine Ausführungsform, bei welcher vorgesehen ist, dass eine Form mit wenigstens einer Rohranbauteilnegativkontur verwendet wird. Unter einem Rohranbauteil wird beispielsweise ein Vorsprung verstanden, welcher insbesondere in radialer Richtung von einem Grundkörper des Rohrs vorsteht und diesen in Umfangsrichtung vollständig oder teilweise umgreift. Das Rohranbauteil kann eine Bördelung sein. Zur Ausbildung des Rohranbauteils ist die entsprechende Negativkontur in der Form hergestellt. Im Falle des vorstehend beschriebenen Vorsprungs ist also eine Vertiefung in der Form realisiert. In diese wird der Rohrrohling bei dem Einleiten des Umformmediums im Sinne des Innenhochdruckumformens hineingedrängt. Nach dem Abkühlen des Kunststoffrohrs verbleibt das Rohranbauteil formstabil und permanent an diesem. Mithilfe der Biegeform, welche eine beliebige Anzahl an Rohranbauteilnegativkonturen aufweisen kann, kann mithin eine beliebige Struktur der Oberfläche des Kunststoffrohrs erzielt werden.

Eine Weiterbildung der Erfindung sieht vor, dass der Druck des Umformmediums in Abhängigkeit von seiner Temperatur derart gewählt wird, dass eine Außenhaut des Rohrrohlings bei dem Einleiten zumindest bereichsweise aufgeweitet wird, insbesondere in die Rohranbauteilnegativkontur gedrängt wird. Je höher die Temperatur des Umformmediums, umso leichter ist der Rohrrohling formbar. Entsprechend ist bei einer größeren Temperatur ein geringerer Druck des Umformmediums notwendig als bei einer geringeren Temperatur, bei welcher entsprechend ein größerer Druck gewählt werden muss. Das Umformmedium soll den hier angesprochenen Druck und die Temperatur zumindest bei seinem Einleiten in den Rohrrohling aufweisen.

Bei ausreichendem Druck, welcher wie erläutert von der Temperatur abhängig ist, weitet sich der Rohrrohling beziehungsweise seine Außenhaut bei dem Einleiten des Umformmediums auf. Vorzugsweise ist der Druck des Umformmediums derart hoch, dass sich der Rohrrohling vollflächig an die Form beziehungsweise eine Innenwand der Form anschmiegt. Soll das vorstehend bereits beschriebene Rohranbauteil an dem Kunststoffrohr ausgebildet werden, so muss der Druck ausreichend hoch sein, sodass ein Hineindrängen des Rohrrohlings beziehungsweise seiner Außenhaut in die Rohranbauteilnegativkontur gewährleistet ist.

Eine vorteilhafte Ausgestaltung der Erfindung sieht vor, dass der Druck des Umformmediums bei dem Einleiten größer als der Berstdruck des Kunststoffrohrs gewählt wird. Hierauf wurde bereits vorstehend eingegangen. Bei diesem Druck ist es notwendig, dass der Rohrrohling in der Vollkonturform angeordnet ist, um eine Beschädigung des Rohrrohlings zu vermeiden. Es ist jedoch insbesondere ein zuverlässiges Ausbilden des wenigstens einen Rohranbauteils durch das Umformen, insbesondere Innenhochdruckumformen, möglich.

Eine Weiterbildung der Erfindung sieht vor, dass der Hohlstab durch Extrudieren hergestellt wird. Der Hohlstab liegt also als Extrusionsbauteil vor. Dieses weist über seine Längserstreckung einen gleichbleibenden Querschnitt auf. Das bedeutet, dass der Rohrrohling bei seinem Einbringen in die Form bevorzugt kein Rohranbauteil aufweist, sondern dass ein solches - falls vorgesehen - erst durch das Umformen, insbesondere Innenhochdruckumformen, beziehungsweise dem Einleiten des Umformmediums ausgebildet wird. Alternativ kann es selbstverständlich auch vorgesehen sein, dass wenigstens ein Rohranbauteil vor dem Einbringen in die Form an dem extrudierten Rohrrohling ausgebildet wird. Dies macht jedoch einen zusätzlichen Verfahrensschritt notwendig, kann jedoch zielführend sein, falls lediglich eine Teilkonturform verwendet wird.

Die Erfindung betrifft weiterhin eine Einrichtung zur Herstellung eines Kunststoffrohrs, insbesondere zur Durchführung des vorstehend erläuterten Verfahrens, die dazu ausgebildet ist, die folgenden Schritte durchzuführen: Herstellen oder Bereitstellen eines Hohlstabs als Rohrrohling; Einbringen des Rohrrohlings in eine, einen Formhohlraum aufweisende Form; und Ausbilden des Kunststoffrohrs durch Einleiten eines Umformmediums in den Rohrrohling zum Umformen, insbesondere Innenhochdruckumformen, des Rohrrohlings.

Dabei ist vorgesehen, dass die Einrichtung dazu ausgebildet, das Umformmedium zu überhitzen und in überhitztem Zustand in den Rohrrohling einzuleiten, dass als Biegeform eine Vollkonturform vorgesehen ist, und/oder dass die Form zum Erwärmen des Umformmediums beheizt ist. Auf die Vorteile einer derartigen Vorgehensweise wurde bereits eingegangen. Die Einrichtung sowie das entsprechende Verfahren können gemäß den vorstehenden Ausführungen weitergebildet sein, sodass insoweit auf diese verwiesen wird.

Die zum Überhitzen des Dampfs notwendige Wärmezufuhr kann beispielsweise durch Wärmeübertragung, also insbesondere über Konvektion, Wärmestrahlung, und/oder Wärmeleitung, erfolgen. Die Einrichtung ist vorzugsweise dazu ausgebildet, den Druck auf einen konstanten, vorgegebenen Druck zu regeln, während gleichzeitig zum Überhitzen notwendige Wärme zugeführt wird.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine als Teilkonturform ausgebildete Form einer Einrichtung zur Herstellung eines Kunststoffrohrs ohne eingelegten Rohrrohling,
- Figur 2: die aus der Figur 1 bekannte Teilkonturform mit eingelegtem Rohrrohling,
- Figur 3: eine als Vollkonturform ausgebildete Form der Einrichtung zur Herstellung des Kunststoffrohrs ohne eingelegten Rohrrohling, und
- Figur 4: die aus der Figur 3 bekannte Vollkonturform mit eingelegtem Rohrrohling.

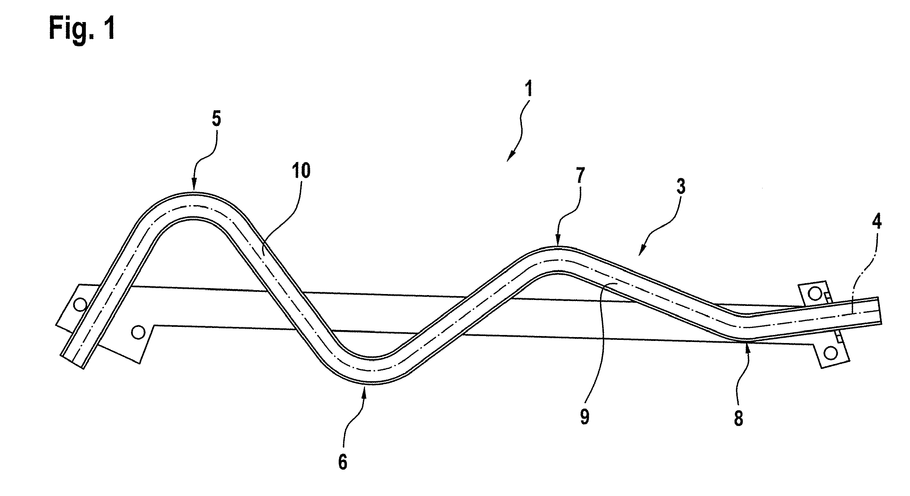

Die Figur 1 zeigt einen Bereich einer Einrichtung 1 zur Herstellung eines Kunststoffrohrs 2, welches hier nicht dargestellt ist. Zu erkennen ist zunächst lediglich eine als Teilkonturform ausgebildete Form 3, insbesondere Biegeform, der Einrichtung 1. Die Form 3 weist entlang ihrer axialen Erstreckung, welche durch eine Längsmittelachse 4 angedeutet ist, mehrere Biegungen 5, 6, 7 und 8 auf. Im Bereich der Biegungen 5 bis 8 liegt ein gekrümmter Verlauf der Längsmittelachse 4 vor, diese ist also nicht gerade. Die als Teilkonturform vorliegende Form 3 weist über ihre gesamte Längserstreckung eine Öffnung 9 auf, welche beispielsweise schlitzartig ausgebildet ist.

Die Form 3 dient dem Herstellen des Kunststoffrohrs 2 aus einem als Hohlstab vorliegenden Rohrrohling (nicht dargestellt). Dieser wird beispielsweise zuvor durch Extrudieren hergestellt. Anschließend wird er in die Form 3 eingebracht, welche zu diesem Zweck einen Formhohlraum 10 aufweist. Der Formhohlraum 10 ist über die Öffnung 9 permanent mit einer Außenumgebung der Form 3 strömungsverbunden. Bei dem Einbringen des Rohrrohlings in den Formhohlraum 10 wird der Rohrrohling vorgebogen. Alternativ kann das Vorbiegen auch bereits vor dem Einbringen erfolgen.

Anschließend wird in den Rohrrohling zum Herstellen des Kunststoffrohrs 2 ein Umformmedium mit einer bestimmten Temperatur und einem bestimmten Druck eingeleitet. Der Druck und die Temperatur sind dabei derart gewählt, dass ein Umformen, insbesondere Innenhochdruckumformen, des Rohrrohlings unter Ausbildung des Kunststoffrohrs 2 erfolgt.

Als Umformmedium wird beispielsweise gesättigter Dampf, insbesondere Wasserdampf, verwendet. Die Temperatur des Umformmediums bei seinem Einleiten in den Rohrrohling ist vorzugsweise größer oder gleich der Fixierungstemperatur des für das Kunststoffrohr 2 verwendeten Kunststoffmaterials. Beispielsweise beträgt diese Fixierungstemperatur mindestens 160°C, mindestens 170°C, mindestens 180°C, mindestens 190°C oder mindestens 200°C.Sie kann jedoch auch deutlich höher sein, beispielsweise mindestens 210°C, mindestens 220°C, mindestens 230°C, mindestens 240C oder mindestens 250°C. Besonders bevorzugt wird das Umformmedium vor dem Einleiten in den Rohrrohling überhitzt und in diesem Zustand in den Rohrrohling eingeleitet. Dies ist insbesondere dann der Fall, wenn die dargestellte Teilkonturform verwendet wird.

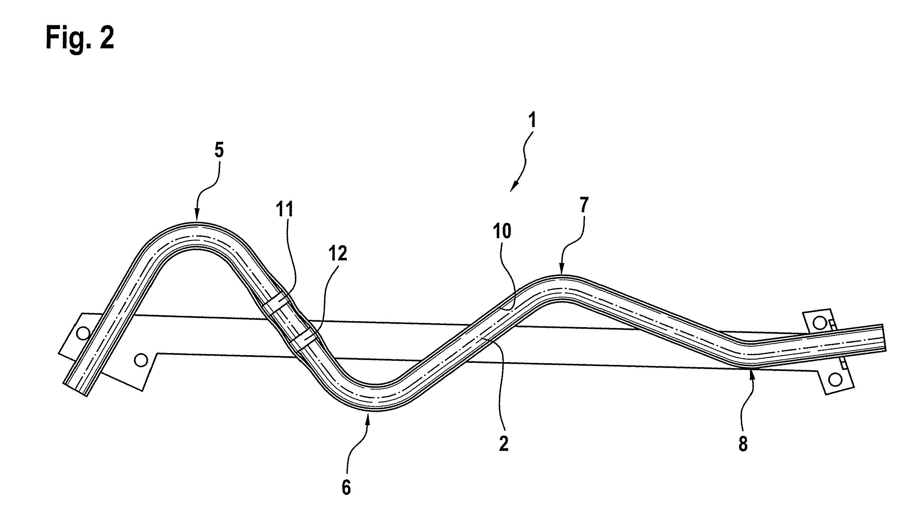

Die Figur 2 zeigt die Einrichtung 1 während des Herstellens des Kunststoffrohrs 2. Es ist erkennbar, dass nun das Kunststoffrohr 2 in fertiger Form in dem Formhohlraum 10 vorliegt. Auch ist erkennbar, dass das Kunststoffrohr 2 mehrere Rohranbauteile 11 und 12 aufweist, welche in Form von in Umfangsrichtung vollständig umlaufenden Radialvorsprüngen vorliegen. Das bedeutet, dass sie über einen nicht gesondert gekennzeichneten Grundkörper des Kunststoffrohrs 2 in radialer Richtung bezüglich einer nicht dargestellten Längsmittelachse des Kunststoffrohrs 2 überstehen. Im Falle der Teilkonturform werden die Rohranbauteile 11 und 12 an dem Rohrrohling vor seinem Einbringen in die Form 3 ausgebildet, beispielsweise angespritzt.

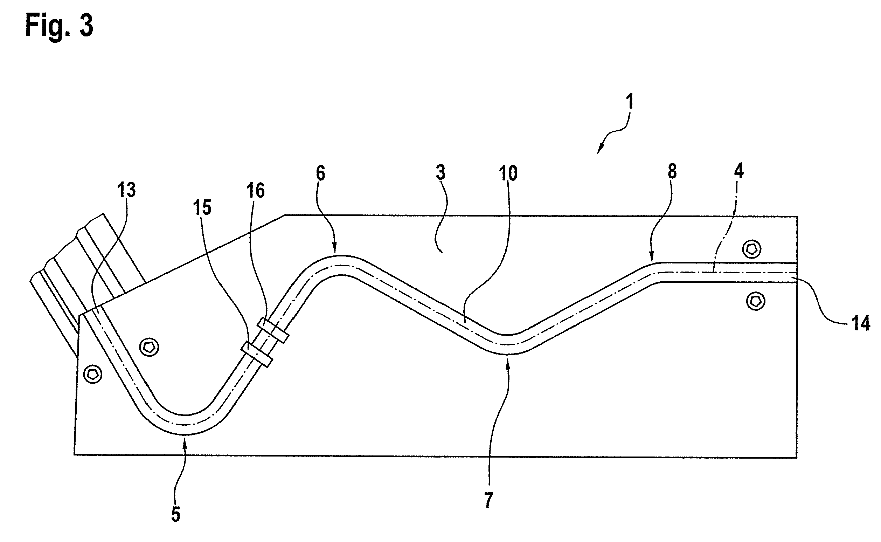

Die Figur 3 zeigt eine alternative Ausgestaltung der Einrichtung 1, wobei die Form 3 nun als Vollkonturform vorliegt, von welcher hier lediglich eine Hälfte dargestellt ist. Zum Ausbilden des Kunststoffrohrs 2 wird der Rohrrohling in den Formhohlraum 10 eingelegt. Anschließend wird die Form 3 geschlossen, sodass der Rohrrohling entlang der gesamten Längsmittelachse 4 des Formhohlraums 10 an jeder Axialposition in Umfangsrichtung vollständig von der Form 3 umschlossen ist. Lediglich an seinen Enden ist der Rohrrohling über Anschlüsse 13 und 14 kontaktierbar. Im Bereich dieser Anschlüsse 13 und 14 wird zum Ausbilden des Kunststoffrohrs 2 das Umformmedium in den Rohrrohling eingebracht beziehungsweise wieder aus diesem entnommen.

Der Druck des Umformmediums kann bei Verwendung einer derartigen Vollkonturform beispielsweise größer gewählt werden als der Berstdruck des Rohrrohlings beziehungsweise des Kunststoffrohrs 2. Alternativ kann eine Kombination aus Temperatur und Druck des Umformmediums gewählt werden, bei welcher das Umformmedium ein plastisches Umformen des Rohrrohlings bewirkt.

Die Verwendung der Vollkonturform ermöglicht zudem die Ausbildung der Rohranbauteile 11 und 12 (hier nicht dargestellt) gemeinsam mit dem Biegen des Rohrrohlings. Zu diesem Zweck weist die Form 3 Rohranbauteilnegativkonturen 15 und 16 auf, die erkennbar mit den Rohranbauteilen 11 und 12 des fertigen Kunststoffrohrs korrespondieren. Bei dem Einbringen des Umformmediums in den Rohrrohling 2 werden nun die Temperatur und der Druck des Umformmediums derart gewählt, dass der Rohrrohling beziehungsweise seine Außenhaut in die Rohranbauteilnegativkonturen 15 und 16 gedrängt wird. Nach dem nachfolgenden Abkühlen des Kunststoffrohrs 2 bleiben die Rohranbauteile 11 und 12 permanent und formstabil erhalten.

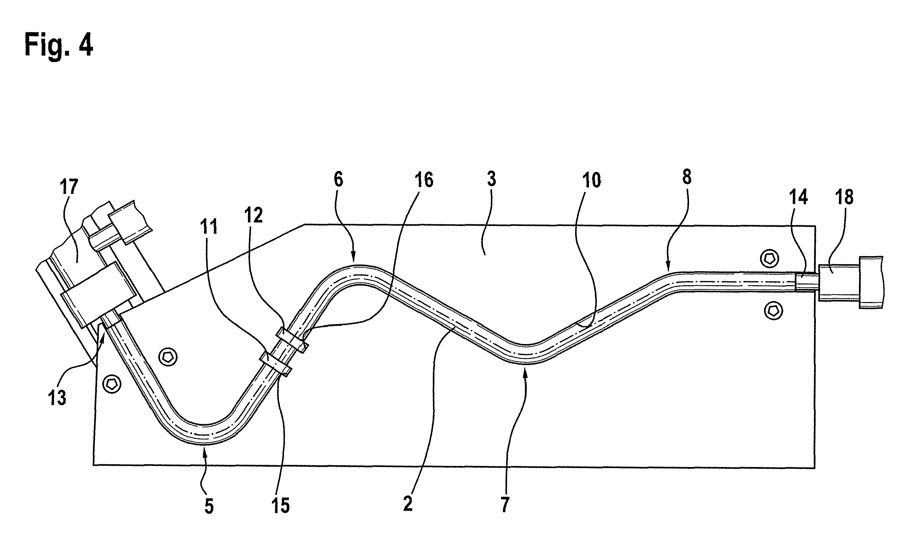

Dies ist im Wesentlichen anhand der Figur 4 erkennbar, in welcher die Einrichtung 1 während eines Verfahrensschritts dargestellt ist, in welchem das Kunststoffrohr 2 bereits ausgebildet ist und die Hälften der Form 3 erneut geöffnet sind. Es wird deutlich, dass die Rohranbauteile 11 und 12 nunmehr an dem Kunststoffrohr 2 ausgebildet sind. Zudem sind Medienanschlüsse 17 und 18 zu sehen, über welche dem Rohrrohling das Umformmedium zugeführt beziehungsweise entnommen wird.

Als Kunststoffmaterial für das hier vorgestellte Kunststoffrohr 2 wird vorzugsweise ein hochtemperaturfestes Kunststoffmaterial verwendet. Beispielsweise findet ein Polyamid Anwendung, besonders bevorzugt PA66, welches eine Fixierungstemperatur von etwa 200°C aufweist. Ein derartig hochtemperaturfestes Kunststoffmaterial lässt sich besonders vorteilhaft mit der hier vorgestellten Einrichtung 1 beziehungsweise dem Verfahren gemäß den vorstehenden Ausführungen zu einem Kunststoffrohr 2 formen.

## Patentansprüche

1. Verfahren zum Herstellen eines Kunststoffrohrs (2), insbesondere eines Kunststoffunterdruckrohrs für ein Kraftfahrzeug, mit den Schritten:
- Herstellen oder Bereitstellen eines Hohlstabs als Rohrrohling,
- Einbringen des Rohrrohlings in eine, einen Formhohlraum (10) aufweisende Form (3), und
- Ausbilden des Kunststoffrohrs (2) durch Einleiten eines Umformmediums in den Rohrrohling zum Umformen, insbesondere Innenhochdruckumformen, des Rohrrohlings,
**dadurch gekennzeichnet, dass** das Umformmedium überhitzt und in überhitztem Zustand in den Rohrrohling eingeleitet wird, dass als Form (3) eine Vollkonturform verwendet wird und/oder dass die Form (3) zum Erwärmen des Umformmediums beheizt wird.

2. Verfahren nach Anspruch 1, **dadurch gekennzeichnet, dass** als Umformmedium gesättigter Dampf, insbesondere Wasserdampf, verwendet wird.

3. Verfahren nach einem der vorhergehenden Ansprüche, **dadurch gekennzeichnet, dass** das Umformen innendornlos erfolgt.

4. Verfahren nach einem der vorhergehenden Ansprüche, **dadurch gekennzeichnet, dass** das Umformmedium bei dem Einleiten eine Temperatur aufweist, die größer oder gleich der Fixierungstemperatur eines für das Kunststoffrohr (2) verwendeten Kunststoffmaterials gewählt wird.

5. Verfahren nach einem der vorhergehenden Ansprüche, **dadurch gekennzeichnet, dass** ein Kunststoffmaterial mit einer Fixierungstemperatur von mindestens 160°C, mindestens170°C, mindestens 180°C, mindestens 190°C oder mindestens 200°C verwendet wird.

6. Verfahren nach einem der vorhergehenden Ansprüche, **dadurch gekennzeichnet, dass** eine Form (3) mit wenigstens einer Rohranbauteilnegativkontur (15,16) verwendet wird.

7. Verfahren nach einem der vorhergehenden Ansprüche, **dadurch gekennzeichnet, dass** der Druck des Umformmediums in Abhängigkeit von seiner Temperatur derart gewählt wird, dass eine Außenhaut des Rohrrohlings bei dem Einleiten zumindest bereichsweise aufgeweitet wird, insbesondere in die Rohranbauteilnegativkontur (15,16) gedrängt wird.

8. Verfahren nach einem der vorhergehenden Ansprüche, **dadurch gekennzeichnet, dass** der Druck des Umformmediums bei dem Einleiten größer als der Berstdruck des Kunststoffrohrs (2) gewählt wird.

9. Verfahren nach einem der vorhergehenden Ansprüche, **dadurch gekennzeichnet, dass** der Hohlstab durch Extrudieren hergestellt wird.

10. Einrichtung (1) zur Herstellung eines Kunststoffrohrs (2), insbesondere zur Durchführung des Verfahrens nach einem oder mehreren der vorhergehenden Ansprüche, die dazu ausgebildet ist, die folgenden Schritte durchzuführen:
- Herstellen oder Bereitstellen eines Hohlstabs als Rohrrohling,
- Einbringen des Rohrrohlings in eine, einen Formhohlraum (10) aufweisende Form (3), und
- Ausbilden des Kunststoffrohrs (2) durch Einleiten eines Umformmediums in den Rohrrohling zum Umformen, insbesondere Innenhochdruckumformen, des Rohrrohlings,
**dadurch gekennzeichnet, dass** die Einrichtung (1) dazu ausgebildet ist, das Umformmedium zu überhitzen und in überhitztem Zustand in den Rohrrohling einzuleiten, dass als Form (3) eine Vollkonturform vorgesehen ist und/oder dass die Form (3) zum Erwärmen des Umformmediums beheizt ist.
